# FASCICULE DE BREVET EUROPEEN

(11) **EP 2 031 836 B1**
(45) Date de publication et mention de la délivrance du brevet: **04.10.2017**
(21) Numéro de dépôt: 08163268.9
(22) Date de dépôt: 29.08.2008
(51) Int. Cl.: H04L 29/12, H04N 1/00, H04L 12/28

(54) **PROCÉDÉ ET SYSTÈME D'ADRESSAGE DE DISPOSITIFS DE RESTITUTION NUMÉRIQUE**
VERFAHREN UND SYSTEM ZUR ADRESSIERUNG VON VORRICHTUNGEN ZUR NUMERISCHEN AUSWERTUNG
METHOD AND SYSTEM FOR ADDRESSING DIGITAL PLOTTING DEVICES

(30) Priorité: 30.08.2007 FR 0757270
(43) Date de publication de la demande: 04.03.2009
(73) Titulaire: Orange, 75015 Paris (FR)
(72) Inventeur: Gustin, Emmanuel, 22700, SAINT QUAY PERROS (FR); Bouvet, Bertrand, 22700, PERROS GUIREC (FR)
(74) Mandataire: Vidon Brevets & Stratégie

(56) Documents cités:
- WO-A-01/42953
- US-B1- 6 957 275

## Description

La présente invention se rapporte au domaine de la restitution numérique de données d'utilisateurs et plus particulièrement à l'adressage de tels dispositifs de restitution, tels que des cadres « photo ».

Les récentes évolutions technologiques dans le domaine de la restitution numérique de données, notamment par l'intermédiaire d'écran LCD ou plasma, ont permis de créer de nouveaux dispositifs qui sont appelés « cadres photo ». De tels dispositifs ne se contentent plus, à l'heure actuelle, d'afficher des photographies numériques mais peuvent également restituer des données sonores ou musicales et même recevoir des signaux numériques en provenance de diffuseurs, par exemple par l'intermédiaire du réseau numérique terrestre.

D'autres dispositifs de restitutions peuvent aussi se présenter sous la forme de diffuseurs de musiques de type « chaînes hi fi » qui sont à même de restituer des fichiers musicaux.

Dernièrement, des dispositifs des types précédemment évoqués se sont vus doté de fonctions de connectivité réseau. Cette connectivité est principalement mise en oeuvre par le biais d'un module WiFi (de l'anglais « Wireless Fidelity ») permettant au dispositif en question de se connecter à un réseau privé de l'utilisateur pour rafraîchir le contenu à restituer sur le dispositif de restitution numérique. Ces dispositifs de restitutions sont donc progressivement entrés dans la sphère des objets communicants, objets qui pourront habilement tirer partie du procédé de l'invention.

Les principes de rafraîchissement proposés par les techniques de l'art antérieur sont basées sur un accès, soit de manière unifiée soit par le biais de logiciels « propriétaires », à un espace de stockage dans lequel le dispositif va puiser des données à restituer (principalement des photos, dans le cas de cadres numériques). Les techniques proposées consistent donc souvent à « déplacer », au sien du réseau de l'utilisateur, l'espace de stockage accessible au cadre. Pour que le nouvel emplacement de stockage soit utilisé, il faut malheureusement souvent qu'un autre équipement de l'utilisateur reste également allumé. En effet, pour que le dispositif, par exemple un cadre, puisse accéder, par le biais de sa connexion sans fil, à l'espace de stockage, il est nécessaire que celui-ci soit disponible en permanence pour ce cadre, ce qui entraîne le plus souvent l'allumage constant de l'ordinateur personnel de l'utilisateur qui constitue cet espace de stockage.

D'autres techniques, notamment basées sur une translation d'adresse, permettent à de tels dispositifs de restitution d'accéder à un espace de stockage situé sur un serveur spécifique, par le biais d'Internet. Ces mécanismes sont basés sur un paramétrage complexe du dispositif. En effet, pour permettre au dispositif d'accéder à l'espace de stockage distant, l'utilisateur doit saisir, au sein de ce dispositif, une URL (de l'anglais « Universal Ressource Locator », adresse de localisation de ressource) ainsi qu'au minimum un identifiant et un mot de passe. Le dispositif de restitution est alors à même de se connecter seul à l'espace de stockage et de procéder à la restitution des données qui y sont stockées Le document WO 01/42953 A (CEIVA LOGIC L L C [US] CEIVA LOGIC INC [US]) 14 juin 2001 (2001-06-14) décrit l'association d'un compte d'utilisateur à une adresse physique (un numéro de série, une adresse MAC) d'un dispositif de restitution des données. Ces techniques présentent plusieurs inconvénients, parmi lesquels la complexité de paramétrage du dispositif de restitution, qui entraîne un rejet quasi systématique de la part des utilisateurs. En effet, pour l'utilisateur normalement informé de ces technologies, les multiples saisies ont pour effet de rendre encore plus ardues les phases de configuration. De plus, en cas de panne ou de remise à zéro des dispositifs, l'utilisateur qui n'a pas pris la peine de conserver les paramètres afin de les ressaisir est obligé soit de renouveler la création de son compte, soit de se connecter à des services en ligne en vue de retrouver ses identifiants ce qui est toujours une source de difficultés.

Un autre inconvénient de ces techniques de l'art antérieur est lié au fait que les opérations de saisie des utilisateurs ne sont pas sécurisées. Ainsi, il est possible que l'utilisateur fasse l'objet d'attaque en vue de récupérer ses mots de passe ou ses identifiants par le biais de ces dispositifs.

Encore un autre inconvénient de ces techniques de l'art antérieur est l'alimentation de l'espace de stockage. En effet quand celui-ci est situé sur le réseau de l'utilisateur, son alimentation passe par l'ajout de contenus, souvent manuellement, à la suite du vidage d'une carte mémoire d'appareil photo par exemple. Quand l'espace de stockage est situé sur un serveur distant, l'alimentation passe par un chargement, à partir d'un navigateur Internet, des contenus en possession de l'utilisateur à partir de son ordinateur personnel. Plusieurs étapes sont donc ajoutées à celle de vidage de la carte mémoire, dont celles, pénibles, de sélection et de chargement.

De plus, l'intérêt de ces espaces de stockage en ligne est de permettre à d'autres utilisateurs, avec lesquels l'utilisateur possédant le dispositif de restitution est en contact, de réaliser leurs propres chargements afin que l'utilisateur du dispositif puisse en profiter. Or, préalablement à ces chargements, les autres utilisateurs doivent obtenir, de la part de l'utilisateur du dispositif, des codes d'identification leur permettant de charger les contenus qu'ils souhaitent. A nouveau, ces codes sont aisément perdus ou oubliés et les utilisateurs ne peuvent pas, ou ne veulent plus, du fait de la complexité des opérations à réaliser, fournir de nouveaux contenus à l'utilisateur du dispositif.

Un autre inconvénient de ces mécanismes de l'art antérieur est que les services en ligne sont principalement mis en oeuvre par les fabricants desdits dispositifs de restitution, de sorte que la pérennité des services fournis n'est pas assurée et qu'il est préjudiciable pour l'utilisateur de ne plus pouvoir utiliser une fonctionnalité du dispositif si le fournisseur décide de ne plus assurer le service de stockage en ligne des contenus à restituer.

La solution proposée par l'invention ne présente pas ces inconvénients de l'art antérieur. Elle concerne en effet un procédé d'adressage d'un dispositif de restitution de données connecté à un réseau de communication par le biais d'un dispositif intermédiaire, caractérisé en ce qu'il comprend :
- une étape d'obtention d'une adresse électronique spécifique audit dispositif de restitution ;
- une étape d'association à ladite adresse électronique d'au moins un identifiant préalablement attribué audit dispositif intermédiaire.

Ainsi, l'invention permet de ne pas avoir à saisir d'information au sein du dispositif de restitution. En effet, à la différence des techniques de l'art antérieur, le procédé selon l'invention ne nécessite pas la saisie, au sein du dispositif de restitution, de l'adresse (par exemple une adresse de courrier électronique) attribuée au dispositif de restitution pour que celui-ci soit à même de restituer des données. En effet, le dispositif de restitution acquiert seul une adresse lui permettant d'assurer la réception ultérieure de données à afficher. L'invention permet donc d'assurer une plus grande sécurité d'usage de ce type de dispositif de restitution tout en limitant les manipulations nécessaires pour l'utilisateur, puisque ce dernier n'a pas à saisir d'information pas plus qu'à se souvenir des informations saisies dans le cas où le dispositif est endommagé ou doit être changé. Le système est parallèlement plus sûr, puisque l'utilisateur est assuré de ne pas se faire « voler » son adresse de courrier électronique par un autre dispositif appartenant à un autre utilisateur puisque l'adresse de courrier électronique est directement liée à un identifiant du dispositif intermédiaire (tel qu'une passerelle résidentielle), par exemple son adresse IP publique, cette adresse IP n'étant attribuée qu'après authentification du dispositif intermédiaire auprès d'un serveur d'authentification, par exemple de type Radius.

Le dispositif intermédiaire peut être une passerelle résidentielle en tant que telle lorsque le dispositif de restitution est un cadre photo ou un autre type de terminal situé dans un réseau privé d'un utilisateur, réseau qui possède son propre espace d'adressage. Dans d'autres applications, le dispositif intermédiaire peut par exemple être inclus dans le réseau d'un opérateur de communications, si le dispositif de restitution est d'un autre genre, comme un assistant personnel mobile.

Selon un mode de réalisation particulier de l'invention, ledit au moins un identifiant préalablement attribué appartient au groupe comprenant au moins :
- une adresse IP publique dudit dispositif intermédiaire ;
- un identifiant de compte d'utilisateur (AID).

Selon une caractéristique particulière de l'invention, ledit procédé comprend :
- une étape préalable d'obtention de ladite adresse IP publique en utilisant ledit identifiant de compte dudit utilisateur (AID) associé à une connexion dudit dispositif intermédiaire audit réseau étendu.
- une étape de stockage, au sein d'une entité dudit réseau étendu, d'un ensemble de données numériques comprenant au moins ladite adresse IP publique et ledit identifiant de compte dudit utilisateur associé.

Ainsi, l'invention permet de ne pas surcharger des dispositifs qui sont responsables de l'attribution des identifiants de compte d'utilisateur, tels que des serveurs d'authentification (de type Radius), en réalisant un stockage, à tout le moins temporaire, de l'adresse IP du dispositif intermédiaire (tel qu'une passerelle résidentielle) de l'utilisateur et de l'identifiant de compte d'utilisateur pour assurer que l'étape d'obtention de l'adresse électronique postérieurement exécutée ne nécessite pas d'aller rechercher des données dans d'autres endroits. On centralise ainsi l'exécution du procédé d'adressage tout en diminuant la charge de traitement à imposer aux équipements connexes.

Selon un mode de réalisation particulier de l'invention, ledit procédé comprend, postérieurement à ladite étape d'association :
- une étape de vérification d'une existence d'un message associé à ladite adresse de messagerie, délivrant une information d'existence ;
- une étape de transfert, à destination d'un espace de stockage accessible audit dispositif de restitution, d'une information représentative de ladite information d'existence.

Ainsi, à l'issue de l'obtention de l'adresse de messagerie, l'invention permet de réceptionner, au sein du dispositif de restitution, au moins une indication de présence d'un message. Le dispositif de restitution est donc à même, grâce au procédé selon l'invention, d'afficher une information représentative de présence de message.

Selon une caractéristique particulière de l'invention ladite information représentative est un fichier restituable sur ledit dispositif de restitution et représentatif dudit message.

Ainsi, à la différence des procédés de l'art antérieur, il n'est pas nécessaire que le dispositif de restitution se connecte à un site Internet spécifiquement dédié au stockage centralisé de données numériques. En effet, les techniques de l'art antérieur, et notamment les "cadres photo" de type WiFi possédant des capacités de connectivité étendues procèdent à une vérification, à intervalles réguliers, des contenus qui sont disponibles à une URL spécifique sur Internet. Cette URL et les informations de connexion privées de l'utilisateur, doivent être saisies par l'utilisateur. Si le service offert en partenariat avec l'achat du cadre photo n'est pas disponible, où si les données ne sont pas affichables, le cadre photo n'affiche rien.

Le procédé selon l'invention se démarque des procédés précédents en associant, au niveau du réseau de l'opérateur, une adresse de messagerie spécifique au dispositif de restitution. L'utilisateur n'est donc amené à saisir qu'une URL d'accès à un serveur au niveau du dispositif. Le procédé de l'invention s'occupe de réaliser les opérations nécessaires à l'affichage, par le dispositif de restitution, des messages qui sont reçus au niveau de cette adresse.

Dans un mode de réalisation particulier de l'invention, l'URL d'accès à un serveur peut être préalablement configurée au sein du dispositif de restitution. Dans un autre mode de réalisation de l'invention, l'URL d'accès peut être préalablement obtenue par le dispositif de restitution par l'intermédiaire de la passerelle résidentielle, évitant ainsi toute saisie de la part de l'utilisateur et assurant que cette adresse puisse être mise à jour par le fournisseur de service au niveau de la passerelle résidentielle.

L'invention présente encore l'avantage d'être indépendante du dispositif de restitution considéré. En effet, les techniques antérieures lient étroitement le dispositif de restitution à un service en ligne spécifique. L'invention permet de palier cet inconvénient en permettant à n'importe quel dispositif qui dispose d'une capacité d'obtention de données sur un réseau privé d'un utilisateur d'obtenir de telles données, même lorsqu'elles sont situées dans un réseau externe au réseau de l'utilisateur.

L'invention concerne également un système de télécommunication incluant un dispositif de restitution de données connecté à un réseau de communication par le biais d'un dispositif intermédiaire, caractérisé en ce qu'il comprend :
- des moyens d'obtention d'une adresse électronique spécifique audit dispositif de restitution ;
- des moyens d'association à ladite adresse électronique d'au moins un identifiant préalablement attribué audit dispositif intermédiaire.

L'invention concerne également un dispositif d'adressage d'un dispositif de restitution de données connecté à un réseau de communication par le biais d'un dispositif intermédiaire.

Selon l'invention, un tel dispositif comprend :
- des moyens d'obtention d'une adresse électronique spécifique audit dispositif de restitution ;
- des moyens d'association à ladite adresse électronique d'au moins un identifiant préalablement attribué audit dispositif intermédiaire.

Dans d'autres modes de réalisation, un tel dispositif selon l'invention comprend des moyens complémentaires de mise en oeuvre du procédé de d'adressage tel que décrit précédemment.

Selon un mode de réalisation particulier de l'invention, un tel dispositif peut être intégré au sein d'une passerelle résidentielle, par exemple pour éviter la création et la gestion d'une nouvelle entité chargée de la mise en oeuvre du procédé de l'invention au sein des réseaux de communication.

Selon un autre aspect, l'invention concerne également un produit programme d'ordinateur téléchargeable depuis un réseau de communication et/ou stocké sur un support lisible par ordinateur et/ou exécutable par un microprocesseur, et comprenant des instructions de code de programme pour l'exécution du procédé d'adressage tel que décrit précédemment.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 est un diagramme de bloc présentant le procédé de l'invention
- la figure 2 illustre l'architecture fonctionnelle permettant une mise en oeuvre du procédé de l'invention ;

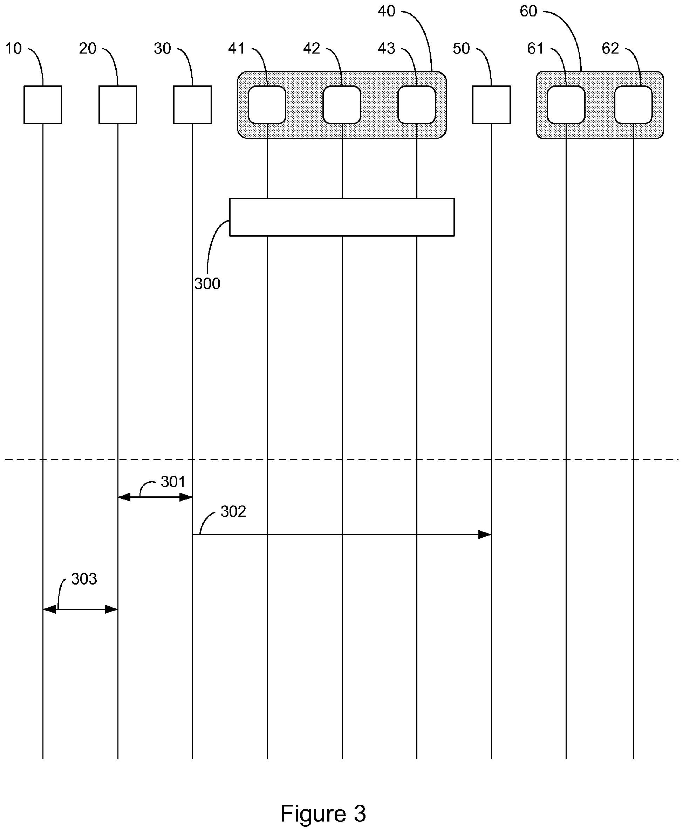

- la figure 3 décrit les phases de souscription et d'enregistrement au service ;
- la figure 4 décrit une mise en oeuvre du procédé de l'invention ;
- la figure 5 décrit les étapes de stockage d'un courrier électronique dans la boite de courrier électronique associée au cadre ;
- la figure 6 décrit les étapes conduisant à la récupération du courrier électronique ;
- la figure 7 décrit succinctement un mode de réalisation d'un dispositif de mise en oeuvre du procédé selon l'invention.

L'invention permet de simplifier et de sécuriser les opérations de récupérations de contenus. En effet, l'invention permet d'éviter de multiples saisies, tant pour l'utilisateur qui doit configurer un dispositif que pour les contributeurs, c'est-à-dire les utilisateurs qui souhaitent fournir du contenu au dispositif pour qu'il les restitue.

A cet effet, l'invention met en oeuvre une authentification du dispositif de restitution à partir d'un autre équipement de l'utilisateur.

Un tel autre équipement peut par exemple être constitué par une « passerelle résidentielle » qui permet à des équipements du réseau privé de l'utilisateur de communiquer avec un réseau étendu (« WAN » de l'anglais « Wide Area Network »). Cette passerelle autorise les communications vers l'extérieur par l'intermédiaire d'un mécanisme appelé « NAT » (de l'anglais « Network Address Translation ») qui permet de réaliser une translation des adresses privées des dispositifs qui souhaitent communiquer à l'extérieur par l'adresse publique de la passerelle résidentielle. L'invention, cependant, ne se situe pas au niveau de ce mécanisme de translation d'adresse. En effet, les équipements qui tirent parti de la translation d'adresse sont légion, comme cela est le cas des dispositifs de restitution de l'art antérieur dont il a été précédemment question.

L'invention, au contraire, permet de minimiser les interactions de l'utilisateur en procédant à une reconnaissance automatique du dispositif de restitution, même lorsque celui-ci ne possède pas de capacité de fourniture d'identifiant et de mot de passe, par exemple.

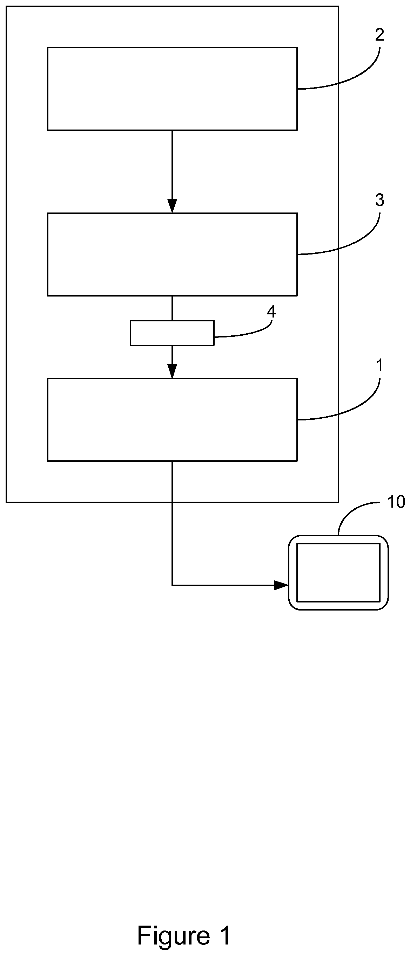

On décrit, en relation avec la figure 1, le principe général du procédé de l'invention. L'invention permet de minimiser les interventions de l'utilisateur. Une telle possibilité est offerte selon l'invention par l'intermédiaire d'une affectation (1) d'une adresse de messagerie spécifique et définitive au dispositif de restitution 10 par l'intermédiaire d'un paramètre de résolution 4 préalablement attribuée à la passerelle résidentielle. L'obtention de l'adresse de messagerie permet donc au dispositif d'être adressable. En d'autres termes, ce sont les données en possession de la passerelle résidentielle qui vont permettre au dispositif de restitution 10 d'avoir accès aux contenus à restituer, et non des données saisies par l'utilisateur. Cette caractéristique assure la simplicité et la sécurité de l'ensemble du procédé d'adressage de l'invention.

La récupération, lors de la mise en oeuvre du procédé de l'invention, de l'adresse de messagerie qui est attribuée au dispositif de restitution peut être réalisée par l'intermédiaire d'au moins deux paramètres : l'adresse publique de la passerelle résidentielle ainsi que l'identifiant du compte utilisateur. Cet identifiant de compte d'utilisateur (également appelé « AID », de l'anglais « Account IDentifier ») est une valeur qui est obtenue au démarrage de la passerelle résidentielle, après que cette dernière ai fait l'objet d'une identification, par exemple par le biais d'un serveur d'authentification de type « Radius ».

Or une telle valeur peut ne pas être directement accessible. L'invention résout ce problème grâce à une obtention (2) de l'identifiant de compte d'utilisateur auprès d'un équipement qui associe cet identifiant de compte à l'adresse IP de la passerelle. Dans ce mode de réalisation, cette obtention (2) est réalisée préalablement à la récupération de l'adresse de messagerie. En effet, dans l'état actuel des mises en oeuvre des passerelles résidentielles, et plus généralement des connexions Internet à haut débit, les adresses IP attribuées par les opérateurs peuvent être dynamiques. Cela signifie qu'une adresse IP est attribuée à chaque initialisation du modem ou de la passerelle. Cependant, la durée d'attribution de ces adresses IP est variable pour atteindre des valeurs pouvant par exemple être de vingt-quatre heures. Ainsi, à intervalles réguliers, l'adresse IP attribuée dynamiquement à un équipement (passerelle ou modem) est renouvelée. L'association entre l'identifiant de compte d'utilisateur et l'adresse IP de la passerelle est donc modifiée régulièrement. Ainsi, un équipement de restitution, tel qu'un cadre photo ne possède pas d'adresse IP fixe qui puisse permettre son adressage directement depuis le réseau de l'opérateur, par le biais d'un mécanisme de translation d'adresse par exemple. De plus, tous les terminaux situés derrière un modem/routeur d'accès ADSL sont en adressage privé, sur le réseau privé de l'utilisateur : leurs adresses sont allouées par cet équipement et les terminaux peuvent avoir des adresses IP privé fixes puisque allouées localement par le modem/routeur.

Pour éviter de devoir sans cesse obtenir l'identifiant du compte d'utilisateur auprès de l'équipement adéquat, le procédé selon l'invention stocke (3) cette information une fois qu'elle est obtenue. Ce stockage, temporaire, permet donc d'économiser les ressources des équipements du réseau de l'opérateur.

En d'autres termes, le procédé selon l'invention permet d'associer une adresse de messagerie à un dispositif qui ne possède pas cette capacité d'adressage en utilisant des informations disponibles par le biais de l'adresse IP publique de l'équipement utilisé pour accéder au réseau de l'opérateur. L'invention résout ainsi au moins deux problèmes : celui de l'incapacité de certains dispositifs de restitution à posséder une adresse de messagerie et celui des lacunes de sécurité que présentent ces dispositifs de restitution. De plus, si un changement de cadre photo doit intervenir (par exemple en cas de mise hors service), l'invention assure qu'il n'y a pas besoin d'une nouvelle reconfiguration pour le cadre photo de remplacement.

Par la suite, on présente notamment le cas d'une mise en oeuvre du procédé de l'invention adapté à la restitution d'images numériques sur des dispositifs appelés « cadres numériques ». Il est clair cependant que l'invention ne se limite pas à cette application particulière, mais peut également être mise en oeuvre dans de nombreuses autres configurations, et par exemple dans le cas d'un dispositif de restitution sonore tel qu'une chaîne hi-fi disposant de fonctionnalités de connexion au réseau et plus généralement dans tous les cas où les avantages listés sont intéressants.

On présente dans ce mode de réalisation, une mise en oeuvre du procédé de l'invention pour l'affichage de photographies numériques au sein d'un cadre photo disposant d'une connectivité réseau, par exemple à l'aide d'un module « wifi » et apte à émettre des requêtes HTTP (de l'anglais « HyperText Transport Protocol » pour « protocole de transfert hypertextuel ») à destination d'un serveur web. Dans ce mode de réalisation, la mise en oeuvre du procédé selon l'invention permet à un cadre numérique de recevoir et d'afficher des MMS (de l'anglais « Multimedia Message Service » pour « Service de messagerie multimédia »), des SMS (de l'anglais « Short Message Service » pour « Service de message courts ») et des courriers électroniques.

A l'heure actuelle, l'envoi de MMS, de SMS et de courriers électroniques est possible vers des terminaux (terminaux mobiles GSM, terminaux analogiques, DECT, ordinateurs personnels, etc...) dès lors qu'ils sont adressables publiquement (terminaux qui disposent d'un numéro de téléphone public ou attachés à une adresse de courrier électronique valide). En d'autres termes, ces terminaux doivent posséder une adresse publique connue.

D'autres terminaux ayant des capacités d'affichage (cadre photo électronique, dispositifs multimédia,) sont également connectés au réseau Internet (via des modems ou des modems/routeurs de type « passerelle résidentielle » en mode filaire Ethernet, Wifi ou encore Bluetooth,...). Ces terminaux ne sont actuellement pas adressables publiquement et ne peuvent donc par conséquent être utilisés pour recevoir et afficher des MMS / SMS /eMail envoyés par des terminaux classiques (GSM, ordinateurs personnels ,...).

La mise en oeuvre du procédé selon l'invention permet de rendre « joignables » des dispositifs actuellement non adressables et connectés en filaire ou en radio au réseau IP Internet à travers des modems ou des modems/routeurs adressables publiquement. L'opération se réalise, selon l'invention, sans aucune configuration supplémentaire du dispositif de restitution. Ces dispositifs sont alors utilisés comme moyen d'affichage et permettent ainsi la réception de MMS, de SMS ou de courriers électroniques. Les dispositifs sont dits « non adressables » parce qu'ils ne possèdent pas d'adresses de messagerie et non pas du fait de l'absence d'adresses permettant la connexion à un réseau personnel (telle qu'une adresse IP attribuée, par exemple, par une passerelle résidentielle en mode DHCP).

Dans ce mode de réalisation, la mise en oeuvre du procédé de l'invention passe par l'affectation préalable d'une adresse de courrier électronique à chaque terminal non adressable publiquement par le biais d'un fournisseur du service. Ce fournisseur de service permet à un utilisateur d'associer une adresse de courrier électronique à un cadre photo. Par exemple, un client disposant d'un cadre photo électronique peut se faire attribuer pour ce dispositif une adresse de courrier électronique de type « 0123456789@cadre.fournisseurdeservice.com » le numéro 0123456789 correspondant par exemple au numéro de la ligne téléphonique RTC sur laquelle est raccordée l'installation terminale du client au réseau Internet (Accès ADSL).

Dans une variante de ce mode de réalisation, une autre solution d'adressage peut également être réalisée en attribuant une adresse SIP (de l'anglais « Session Initialisation Protocol » pour « protocole d'initialisation de session ») au terminal avec écran. Dans ce cas, le modem d'accès (la passerelle résidentielle) assurera la correspondance entre des requêtes web et des requêtes SIP.

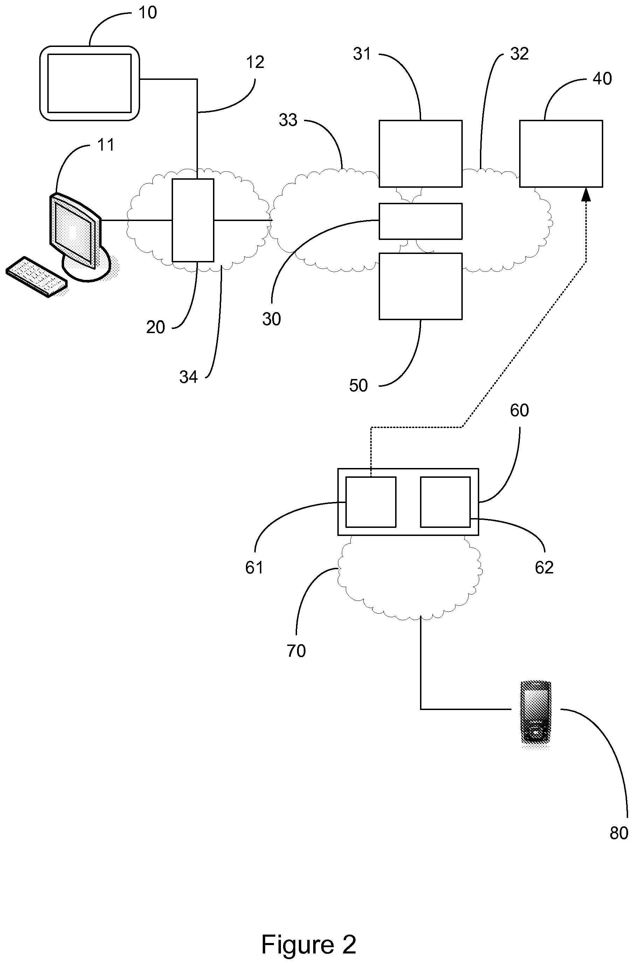

On décrit, en relation avec la figure 2, l'architecture fonctionnelle permettant à un terminal mobile 80 d'envoyer un MMS vers le cadre photo 10 électronique raccordé au réseau Internet 32 via une connexion réseau 12 avec une passerelle résidentielle 20.

Dans ce mode de réalisation, l'invention repose, pour sa mise en oeuvre, sur les éléments techniques suivants :
- Une installation chez l'utilisateur de la passerelle résidentielle 20 (faisant office de modem ADSL-Routeur), d'un ordinateur personnel 11 connecté au réseau IP via Ethernet, du Cadre Photo Electronique 10 relié au réseau Internet 32 via une connexion 12 avec la passerelle résidentielle ;
- Un réseau d'accès 34, par exemple de type ATM ;
- Des réseaux de collecte ATM ou Giga Ethernet 33 ;
- Un point d'entrée 30 dans le réseau IP du fournisseur Internet (BAS) dans le cas d'un réseau de collecte ATM ;
- Un serveur Radius 31 du fournisseur Internet qui permet l'authentification de l'utilisateur lors de la connexion de la passerelle résidentielle 20 au réseau Internet 32 (contrôle validité de l'identifiant/mot de passe Internet) ;
- Une base de données d'association 50 de l'adresse IP publique de la passerelle 20 à l'Identifiant client (AID). Cette base de données peut être accédée par l'intermédiaire d'un serveur idoine. Au sein de la base de données, on mémorise, lors de la phase d'authentification, l'adresse IP du client Internet. En France l'adresse IP peut être allouée pour une durée maximale de vingt-quatre heures via la session PPPoE (en anglais « point-to-point protocol over Ethernet » est un protocole d'encapsulation du protocole de communication point à point sur Ethernet,) au-delà, le réseau affecte une nouvelle adresse IP ainsi que son identifiant client AID (de l'anglais « Account IDentifier ») (retrouvé lors de la phase d'authentification Radius) ;
- Le réseau Mobile 70 muni de son environnement MMSE 60 (Multimédia Service Environnement) composé d'un serveur MMS (MMSC) 62 et d'un serveur relai de MMS 61 ;
- Le terminal mobile 80 associé au réseau mobile permettant l'envoi de MMS (Photos, vidéo, sons...).

Dans ce mode de réalisation, le procédé de l'invention utilise un mécanisme d'association de l'adresse IP à l'identifiant client AID (Account IDentifier) au sein d'une base de données d'association 50 de l'adresse IP publique de la passerelle 20 à l'Identifiant client (AID) pour contourner le problème de l'adresse IP privée fournie au cadre non adressable par le modem/routeur (passerelle résidentielle) lors de l'attachement DHCP et donc ainsi contourner le problème de NAPT IP (de l'anglais « Network Address and Port Translation » pour « Translation d'Adresse et de Port »).

On utilise par la suite un mécanisme dit de « polling Web » permettant un rafraîchissement automatique, à la période de temps désirée, pour la consultation d'un espace de stockage par le cadre numérique. L'invention permet de substituer le simple espace de stockage (des techniques antérieures) par une boîte de réception de courrier électronique et d'afficher le contenu des messages présents dans cette boîte. Ainsi, à la place en remplacement de l'espace de stockage classique, l'invention permet au cadre d'afficher le contenu de courriers électroniques.

Dans ce mode de réalisation, une entité spécifique du réseau de l'opérateur met en oeuvre le procédé de l'invention. L'entité ajoutée dans le cadre de cette invention est un serveur nommé SIPhoto qui est connecté sur le réseau IP de l'opérateur du service ou sur le réseau Internet. Ce serveur est composé des entités fonctionnelles suivantes :
- un serveur Web ;
- une base de données permettant le stockage de l'adresse email allouée au terminal de type cadre (0123456789@cadre.fournisseurdeservice.com) et l'identifiant AID du client chez le fournisseur de service ;
- un serveur de courrier électronique de type SMTP ;
- un module d'interface d'approvisionnement permettant au Système d'Information de créer l'adresse de courrier électronique allouée au cadre et de la stocker avec l'AID au niveau de la base de données du SIPhoto ;
- un module de supervision et de traces pour l'administration du système.

On décrit, en relation avec la figue 3, la dynamique de fonctionnement pour les phases préalables de souscription au service et de connexion au réseau Internet :
- Lors de la souscription (300) au service, l'utilisateur dispose déjà d'un abonnement Internet. Il est donc connu du système d'information et dispose d'un identifiant de compte d'utilisateur (AID). Un numéro (par exemple un numéro E164) est associé au cadre 10. Ce peut être le numéro de la ligne téléphonique RTC (Réseau Téléphonique Commuté) ou bien un numéro d'une tranche dédiée tout comme le 087 et 097 est utilisé pour la VoIP. Le système d'information provisionne la base de donnée (DB) 42 du serveur SIPhoto 40 avec deux informations : l'identifiant client AID et le numéro E164. Ce numéro permet de former le début de l'adresse de courrier électronique qui sera attribuée au cadre.
- Lors de l'établissement (301) de la session « PPPoE » pour la connexion Internet de la passerelle 20 avec le BAS 30, la base de données d'association 50 est mis à jour (302) avec la correspondance {AID ; @IP publique attribuée à la passerelle} (une nouvelle adresse IP est attribuée en France automatiquement toutes les vingt-quatre heures sauf dans le cas d'un abonnement spécifique Internet avec adresse IP fixe) ;
- Lorsque le cadre 10 est mis sous tension, il établit (303) une session DHCP avec le serveur DHCP de la passerelle 20. Une adresse IP privée lui est attribuée (même mécanisme quand on connecte un PC accédant à Internet via Ethernet / WiFi).

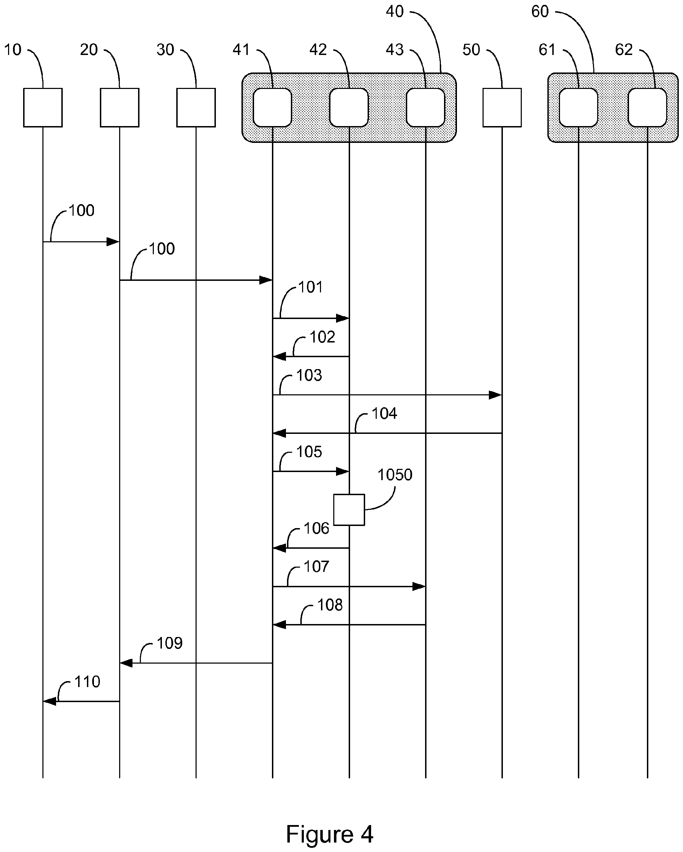

On décrit, en relation avec la figure 4 les phases constituant le premier accès au serveur web du serveur SIPhoto 40 par le cadre 10. On suppose que le cadre 10 est configuré par son possesseur pour accéder à une URL, cette URL correspondant à la page d'accueil du serveur Web 41 lié à l'invention.

Ce premier accès du cadre 10 permet de retrouver, à partir de l'adresse IP publique et dynamique attribuée à la passerelle résidentielle 20, l'identifiant AID du client via une requête à la base de données d'association 50, puis de stocker le triplet {adresse IP publique de la passerelle résidentielle, AID, adresse de courrier électronique du cadre} au sein de la base de données 42 du serveur SIPhoto 40 de manière à ne pas avoir à consulter la base de données d'association 50 à chaque requête HTTP émise de manière régulière par le cadre 10 (qui peut être de l'ordre de la minute). Dans ce mode de réalisation, lors du premier accès au serveur Web 41, un script consulte la boîte de courrier électronique 43 associée au cadre photo. Comme cette boite 43 est vide, on affiche le contenu d'une page Web par défaut. Cette page intègre un mécanisme de rafraîchissement automatique de manière à ce que le cadre accède régulièrement au serveur Web 41 du serveur SIPhoto 40.

En d'autres termes, lorsque la requête HTTP GET (100) est présentée au serveur Web 41 (par l'intermédiaire de la passerelle 20), ce dernier récupère l'adresse IP source du paquet correspondant à l'adresse IP publique allouée à la passerelle 20. Un script accède la base de donnée (101) 42 en utilisant l'adresse IP de la passerelle comme clé d'entrée pour retrouver le numéro du cadre (E164). Comme c'est la première requête de consultation, il n'y a pas de correspondance disponible (102). Dès lors, le script enchaîne une consultation (103) de la base de données d'association 50 pour obtenir (104) l'identifiant du client AID à partir de l'adresse IP publique de la passerelle 20. Si l'AID est retourné (104), le script du serveur Web 41 consulte à nouveau (105) la base de donnée DB 42 avec comme clé d'entrée {Adresse IP passerelle ; AID}. Ce couple permet de retrouver (106) de manière fiable le numéro E164 du cadre 10 du client Internet identifié par AID. Ces informations sont sauvegardées (1050) dans la base de données DB 42 pour limiter les échanges avec la base de données d'association 50. Le numéro E164 est retourné au serveur Web qui se charge de consulter (107) la boite de courrier électronique à l'aide de l'adresse « e164@cadre.fournisseurdeservice.com ». Comme il n'y a pas de message (108), une page web par défaut est générée et retournée (109, 110) au cadre 10 qui l'affiche. Cette page possède un mécanisme de rafraîchissement qui permet au cadre de consulter régulièrement le serveur Web 41.

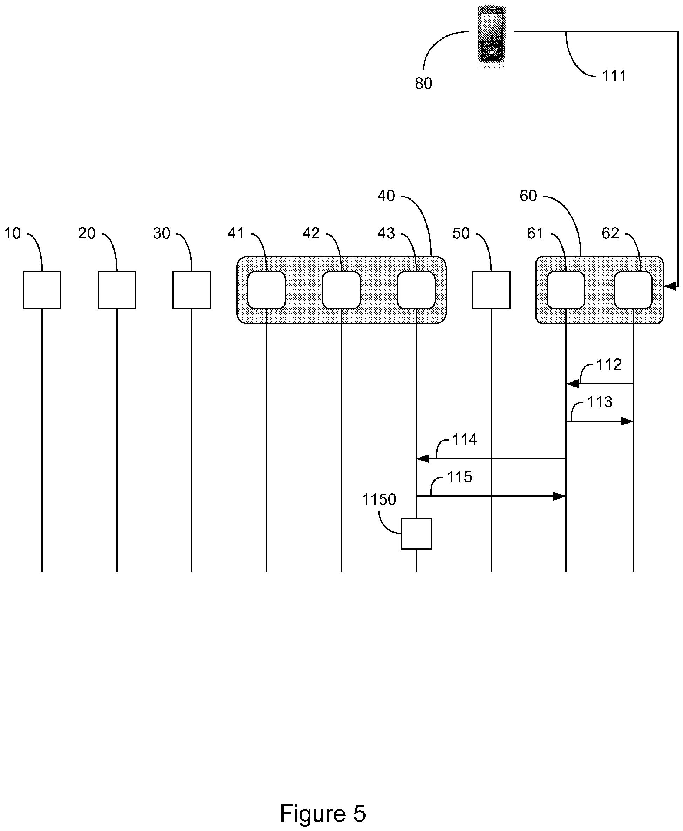

On décrit, en relation avec la figure 5, de manière macroscopique l'envoi (111) d'un MMS depuis un terminal GSM 80 vers un centre de gestion de MMS 60. Dans ce cas, l'appelant doit composer l'adresse de courrier électronique allouée au cadre photo. Le MMS est transmis (111) vers le MMSC 62 (centre de réception de MMS) qui détecte que le MMS est à destination d'une boîte de courrier électronique et non pas d'un numéro de téléphone. La fonction « MMS relay » 61 est donc utilisée (112, 113) et le MMS est transmis (114, 115) sous forme de courrier électronique avec pièce(s) jointe(s) vers le serveur de nom de domaine « cadre.fournisseurdeservice.com » sur lequel il est stocké (1150).

Ainsi, par exemple, depuis un mobile 80, un utilisateur prend une photo de vacances et l'envoie (111) via un MMS vers l'adresse « e164@cadre.fournisseurdeservice.com ». Le MMS est envoyé (111) vers le MMSC 62 de l'opérateur mobile de l'appelant. Ce dernier le relaie (112) via son interface MM3 (61) et le protocole SMTP vers le serveur de courrier électronique 43 du serveur 40 de nom domaine « cadre.fournisseurdeservice.com » (les différentes phases d'acquittement ne sont pas mentionnées pour simplifier l'illustration des échanges).

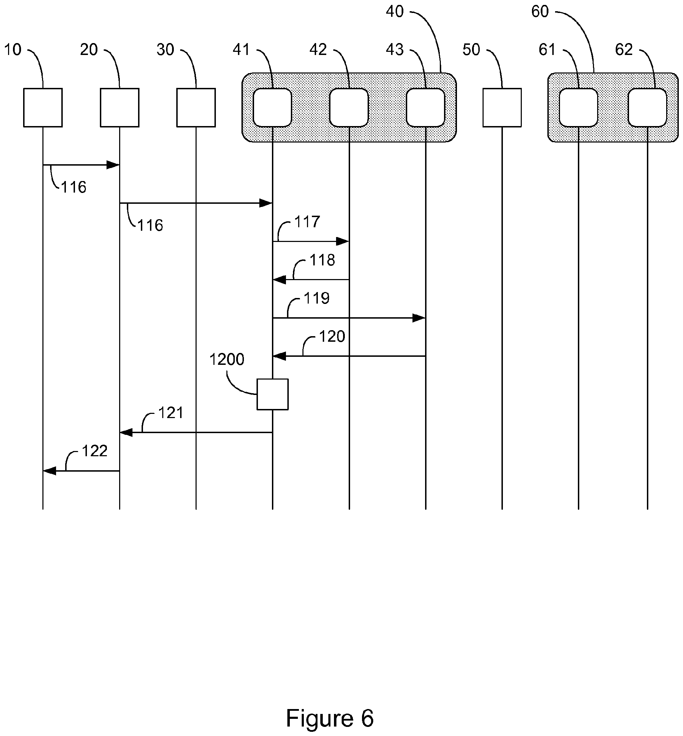

On décrit, en relation avec la figure 6, la phase de récupération du courrier électronique (correspondant au MMS transmis précédemment, tel que décrit en figure 5). Tout comme la première phase de connexion, le cadre 10 se connecte (116) via HTTP vers le serveur Web 41 du SIPhoto 40. L'adresse IP publique de la passerelle résidentielle (adresse IP source du paquet transportant la requête GET HTTP) permet de retrouver (117, 118) dans la base de données 42 liée à l'invention l'adresse de courrier électronique du cadre photo (sans interroger la base de données d'association 50). Un script au niveau du serveur Web 41 consulte (119) la boîte de courrier électronique 43 associée au cadre photo et si un courrier est présent (120), un autre script met en forme (1200) ce courrier électronique pour qu'il soit lisible en mode « web » par le cadre photo 10. Le cadre 10 reçoit (122) la réponse du serveur web 41, par l'intermédiaire (121) de la passerelle et affiche la page correspondante. Cette page affichant le MMS permet également un rafraîchissement automatique pour que le cadre photo 10 consulte régulièrement le serveur Web 41 de SIPhoto 40. Différents algorithmes peuvent être choisis par les clients pour afficher les courriers électroniques et éventuellement les détruire après affichage.

Ainsi, en d'autres termes, lors du rafraîchissement automatique de la page web (à l'aide par exemple d'un module client HTTP présent dans le cadre) le numéro E164 correspondant au cadre 10 est retrouvé directement dans la base de données DB 42 du serveur SIPhoto 40 à partir de l'adresse IP de la passerelle 20 ce qui évite de surcharger la base de données d'association 50 (le triplet {adresse IP, AID, E164} ayant été marqué comme valide lors du 1er chargement de la page Web}. Le script du serveur Web 41 consulte alors la boîte de courrier 42 correspondant au cadre 10 (e164@ cadre.fournisseurdeservice.com). Le courrier électronique est retourné au serveur Web 41 qui le met en forme et le retourne au cadre 10 qui l'affiche. Ce cycle de lecture se rafraîchit automatiquement par la page web elle-même. Le courrier électronique peut être marqué comme lu. Un algorithme spécifique peut lire tous les mails de la boîte de manière séquentielle, depuis une certaine date, etc.

### Gestion de plusieurs dispositifs de restitution

Dans un mode de réalisation complémentaire de l'invention, correspondant au cas où l'utilisateur dispose de plusieurs dispositifs de restitution, deux possibilités sont offertes par l'invention :
1. Si l'utilisateur souhaite que chaque cadre soit indépendant, et que chacun de ces cadres reçoivent ses propres données à afficher, une adresse de courrier électronique est attribuée à chaque cadre. Il est donc nécessaire de fournir une information supplémentaire nécessaire à l'identification du cadre au sein du réseau privé. Cette information peut être l'adresse matérielle (également appelée adresse « mac » de chacun des cadres. Cette opération peut être réalisée lors de la prise d'abonnement au service. Elle est utilisée pour effectuer le routage approprié (correspondance adresse « mac » / adresse de courrier électronique).
2. Si l'utilisateur souhaite que tous les cadres affichent les mêmes informations en même temps, il n'est pas nécessaire de procéder à des modifications de la mise en oeuvre, dans la mesure où chaque cadre accédera au SIPhoto comme s'il n'y avait qu'un seul cadre. La passerelle résidentielle se chargera de la translation d'adresse pour router les réponses aux requêtes http formulées par les différents cadres.

### Autres caractéristiques optionnelles et avantages

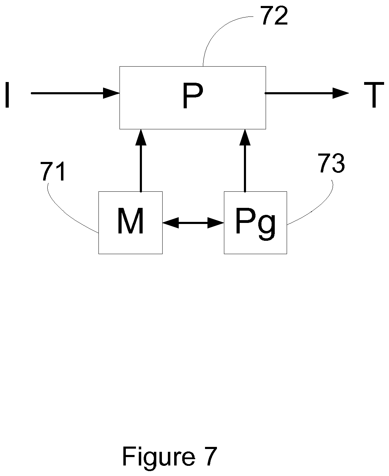

On présente, en relation avec la figure 7, un mode de réalisation d'un dispositif de mise en oeuvre du procédé d'adressage selon l'invention.

Un tel dispositif comprend une mémoire 71 constituée d'une mémoire tampon, une unité de traitement 72, équipée par exemple d'un microprocesseur µP, et pilotée par le programme d'ordinateur 73, mettant en oeuvre le procédé de d'adressage selon l'invention.

A l'initialisation, les instructions de code du programme d'ordinateur 73 sont par exemple chargées dans une mémoire RAM avant d'être exécutées par le processeur de l'unité de traitement 72. L'unité de traitement 72 reçoit en entrée au moins une information I à transmettre (telle qu'une requête vocale au service de transcription vocale). Le microprocesseur de l'unité de traitement 72 met en oeuvre les étapes du procédé de d'adressage décrit précédemment, selon les instructions du programme d'ordinateur 73, pour délivrer une information traitée T (tel qu'un texte transcrit). Pour cela, le dispositif d'adressage comprend, outre la mémoire tampon 71, des moyens de formulation de requête et de réponse, et des moyens de traitement d'informations, permettant notamment l'exécution du procédé selon l'invention. Ces moyens sont pilotés par le microprocesseur de l'unité de traitement 72.

## Revendications

1. Procédé de mise à jour de l'adressage d'un dispositif de restitution de données (10) connecté à un réseau de communication (32) par le biais d'un dispositif intermédiaire(20), une adresse électronique spécifique étant attribuée audit dispositif de restitution de données, **caractérisé en ce qu'**il comprend une étape d'association à ladite adresse électronique d'au moins un identifiant préalablement attribué audit dispositif intermédiaire, ledit au moins un identifiant appartenant au groupe comprenant au moins :
- un identifiant de connexion dynamique dudit dispositif intermédiaire audit réseau de communication ;
- un identifiant de compte d'utilisateur -AID.

2. Procédé de mise à jour selon la revendication 1, **caractérisé en ce qu'**il comprend, préalablement à ladite étape d'association :
- une étape d'obtention dudit identifiant de connexion dynamique en utilisant ledit identifiant de compte dudit utilisateur (AID) associé à une connexion dudit dispositif intermédiaire audit réseau
- une étape de stockage, au sein d'une entité dudit réseau, d'un ensemble de données numériques comprenant au moins ledit identifiant de connexion dynamique et ledit identifiant de compte dudit utilisateur associé.

3. Procédé de mise à jour selon la revendication 2, **caractérisé en ce qu'**il comprend, postérieurement à ladite étape d'association :
- une étape de vérification d'une existence d'un message associé à ladite adresse de messagerie, délivrant une information d'existence ;
- une étape de transfert, à destination d'un espace de stockage accessible audit dispositif de restitution, d'une information représentative de ladite information d'existence.

4. Procédé selon la revendication 3, **caractérisé en ce que**, ladite information représentative est un fichier restituable sur ledit dispositif et représentatif dudit message.

5. Système de télécommunication incluant un dispositif de restitution de données (10) connecté à un réseau de communication (32) par le biais d'un dispositif intermédiaire(20), une adresse électronique spécifique étant attribuée audit dispositif de restitution de données, **caractérisé en ce qu'**il comprend des moyens d'association à ladite adresse électronique d'au moins un identifiant préalablement attribué audit dispositif intermédiaire, ledit au moins un identifiant appartenant au groupe comprenant au moins :
- un identifiant de connexion dynamique dudit dispositif intermédiaire audit réseau de communication;
- un identifiant de compte d'utilisateur -AID.

6. Dispositif de mise à jour de l'adressage d'un dispositif de restitution de données (10) connecté à un réseau de communication (32) par le biais d'un dispositif intermédiaire (20), une adresse électronique spécifique étant attribuée audit dispositif de restitution de données, **caractérisé en ce qu'**il comprend des moyens d'association à ladite adresse électronique d'au moins un identifiant préalablement attribué audit dispositif intermédiaire, ledit au moins un identifiant appartenant au groupe comprenant au moins :
- un identifiant de connexion dynamique dudit dispositif intermédiaire audit réseau de communication;
- un identifiant de compte d'utilisateur -AID.

7. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé de mise à jour selon l'une au moins des revendications 1 à 4, lorsqu'il est exécuté sur un ordinateur.

## Patentansprüche

1. Verfahren zur Aktualisierung der Adressierung einer Vorrichtung (10) zur Wiedergabe von Daten, die mit einem Kommunikationsnetz (32) mittels einer Zwischenvorrichtung (20) verbunden ist, wobei eine spezifische elektronische Adresse der Vorrichtung zur Wiedergabe von Daten zugewiesen wird,
**dadurch gekennzeichnet, dass** dieses umfasst: einen Schritt zum Assoziieren mindestens eines Identifikators, welcher der Zwischenvorrichtung zuvor zugewiesen wird, mit der elektronischen Adresse, wobei der mindestens eine Identifikator zur Gruppe gehört, die mindestens umfasst:
- einen Identifikator der dynamischen Verbindung der Zwischenvorrichtung mit dem Kommunikationsnetz;
- einen Identifikator der Benutzerkonto-AID.

2. Verfahren zur Aktualisierung nach Anspruch 1,
**dadurch gekennzeichnet, dass** dieses, vor dem Assoziationsschritt, umfasst:
- einen Schritt zum Erhalten des Identifikators der dynamischen Verbindung unter Verwendung des Identifikators des Benutzerkontos (AID), der mit einer Verbindung der Zwischenvorrichtung mit dem Netz assoziiert ist,
- einen Schritt zum Speichern, in einer Einheit des Netzes, einer Gesamtheit numerischer Daten, umfassend mindestens den Identifikator der dynamischen Verbindung und den assoziierten Identifikator des Benutzerkontos.

3. Verfahren zur Aktualisierung nach Anspruch 2,
**dadurch gekennzeichnet, dass** dieses, nach dem Assoziationsschritt, umfasst:
- einen Schritt zum Verifizieren des Vorliegens einer mit der E-Mail-Adresse assoziierten Nachricht, die eine Information des Vorliegens liefert;
- einen Schritt des Transfers, an das Ziel eines für die Wiedergabevorrichtung zugänglichen Speicherraums, einer Information, die für die Information des Vorliegens repräsentativ ist.

4. Verfahren nach Anspruch 3,
**dadurch gekennzeichnet, dass** die repräsentative Information eine auf der Vorrichtung wiedergebbare Datei ist und für die Nachricht repräsentativ ist.

5. Telekommunikationssystem, welches eine Vorrichtung (10) zur Wiedergabe von Daten aufweist, die mit einem Kommunikationsnetz (32) mittels einer Zwischenvorrichtung (20) verbunden ist, wobei eine spezifische elektronische Adresse der Vorrichtung zur Wiedergabe von Daten zugewiesen ist,
**dadurch gekennzeichnet, dass** dieses umfasst: Mittel zur Assoziation mindestens eines Identifikators, welcher zuvor der Zwischenvorrichtung zugewiesen wird, mit der elektronischen Adresse, wobei der mindestens eine Identifikator zur Gruppe gehört, die mindestens umfasst:
- einen Identifikator der dynamischen Verbindung der Zwischenvorrichtung mit dem Kommunikationsnetz;
- einen Identifikator der Benutzerkonto-AID.

6. Vorrichtung zur Aktualisierung der Adressierung einer Vorrichtung (10) zur Wiedergabe von Daten, die mit einem Kommunikationsnetz (32) mittels einer Zwischenvorrichtung (20) verbunden ist, wobei eine spezifische elektronische Adresse der Vorrichtung zur Wiedergabe von Daten zugewiesen ist,
**dadurch gekennzeichnet, dass** diese umfasst: Mittel zur Assoziation mindestens eines Identifikators, welcher zuvor der Zwischenvorrichtung zugewiesen wird, mit der elektronischen Adresse, wobei der mindestens eine Identifikator zur Gruppe gehört,
die mindestens umfasst:
- einen Identifikator der dynamischen Verbindung der Zwischenvorrichtung mit dem Kommunikationsnetz;
- einen Identifikator der Benutzerkonto-AID.

7. Computerprogrammprodukt, welches von einem Kommunikationsnetz heruntergeladen und/oder auf einem computerlesbaren Medium gespeichert und/oder von einem Mikroprozessor ausgeführt werden kann,
**dadurch gekennzeichnet, dass** dieses Programmcodeinstruktionen zur Ausführung des Verfahrens zur Aktualisierung gemäß mindestens einem der Ansprüche 1 bis 4 umfasst, wenn es auf einem Computer ausgeführt wird.

## Claims

1. Method for updating the addressing of a data rendering device (10) connected to a communication network (32) through an intermediate device (20), a specific electronic address being assigned to said data rendering device, **characterized in that** it comprises a step of association with said electronic address of at least one identifier previously assigned to said intermediate device, said at least one identifier belonging to the group comprising at least:
- an identifier of dynamic connection of said intermediate device to said communication network;
- a user account identifier AID.

2. Updating method according to Claim 1, **characterized in that** it comprises, prior to said association step:
- a step of obtaining of said dynamic connection identifier by using said account identifier of said user (AID) associated with a connection of said intermediate device to said network;
- a step of storage, in an entity of said network, of a set of digital data comprising at least said dynamic connection identifier and said associated account identifier of said user.

3. Updating method according to Claim 2, **characterized in that** it comprises, after said association step:
- a step of verification of an existence of a message associated with said messaging address, delivering an existence information item;
- a step of transfer, to a storage space accessible to said rendering device, of an information item representative of said existence information item.

4. Method according to Claim 3, **characterized in that** said representative information item is a file that can be rendered on said device and is representative of said message.

5. Telecommunication system including a data rendering device (10) connected to a communication network (32) through an intermediate device (20), a specific electronic address being assigned to said data rendering device, **characterized in that** it comprises means for associating, with said electronic address, at least one identifier previously assigned to said intermediate device, said at least one identifier belonging to the group comprising at least:
- an identifier of dynamic connection of said intermediate device to said communication network;
- a user account identifier AID.

6. Device for updating the addressing of a data rendering device (10) connected to a communication network (32) through an intermediate device (20), a specific electronic address being assigned to said data rendering device, **characterized in that** it comprises means for associating, with said electronic address, at least one identifier previously assigned to said intermediate device, said at least one identifier belonging to the group comprising at least:
- an identifier of dynamic connection of said intermediate device to said communication network;
- a user account identifier AID.

7. Computer program product that can be downloaded from a communication network and/or stored on a medium that can be read by a computer and/or run by a microprocessor, **characterized in that** it comprises program code instructions for the execution of the updating method according to at least one of Claims 1 to 4, when it is run on a computer.
